**Europäisches Patentamt**

**European Patent Office**

**Office européen des brevets**

(19)

(11) Numéro de publication : **0 044 791**
**B1**

(12) # FASCICULE DE BREVET EUROPÉEN

(45) Date de publication du fascicule du brevet :
07.11.84

(21) Numéro de dépôt : **81401152.4**

(22) Date de dépôt : **21.07.81**

(51) Int. Cl.³ : **G 01 J 5/06**

(54) **Dispositif détecteur de rayonnement infrarouge.**

(30) Priorité : 22.07.80 FR 8016126

(43) Date de publication de la demande :
27.01.82 Bulletin 82/04

(45) Mention de la délivrance du brevet :
07.11.84 Bulletin 84/45

(84) Etats contractants désignés :
**DE GB IT NL SE**

(56) Documents cités :
**FR-A- 1 275 955**
**FR-A- 2 300 332**
**US-A- 3 770 958**
**US-A- 3 875 408**
**US-A- 3 962 578**
**PATENT ABSTRACTS OF JAPAN, vol. 1, no. 76, 21 juillet 1977, page 1131 E 77**

(73) Titulaire : **THOMSON-CSF**
**173, Boulevard Haussmann**
**F-75379 Paris Cedex 08 (FR)**

(72) Inventeur : **Le Bars, Jean-François**
**173, bld Haussmann**
**F-75360 Paris Cedex 08 (FR)**

(74) Mandataire : **Trocellier, Roger et al**
**THOMSON-CSF SCPI 173, Bld Haussmann**
**F-75379 Paris Cedex 08 (FR)**

Jouve, 18, rue St-Denis, 75001 Paris, France

## Description

La présente invention concerne des dispositifs détecteurs de rayonnement infrarouge (IR en abrégé) dans lequel le détecteur IR proprement dit, constitué par un ou plusieurs éléments détecteurs photoélectriques, est refroidi et supporté par un dispositif de refroidissement. Le détecteur IR, adapté à la bande spectrale d'exploitation prévue, est généralement positionné au foyer d'une optique réceptrice.

En sus du refroidissement, il faut ajuster l'angle de vue, ou angle d'ouverture du détecteur à la valeur nécessaire afin de limiter au mieux la valeur continue du courant détecté dû au fond observé, en vue d'optimiser le rapport signal sur bruit de la détection. Une ouverture optique du détecteur supérieure à l'ouverture utile de l'optique collectrice se traduit par un accroissement de ce courant parasite, dit courant de fond, et consécutivement du bruit détecté.

Dans la pratique, ce problème est résolu par une pièce métallique solidaire de la structure interne du dispositif de refroidissement supportant le détecteur IR. Cette pièce métallique, appelée couramment écran froid, comporte un évidement formant diaphragme et fixant la valeur d'ouverture optique du détecteur. La configuration de l'écran froid est donc fonction de l'angle de vue choisi pour le détecteur, ces éléments étant internes au dispositif de refroidissement qui est clos par une fenêtre transparente, ou hublot.

Il en résulte que l'ensemble constitué par le dispositif de refroidissement et le détecteur est conçu pour une valeur d'angle de vue prédéterminée et que toute modification éventuelle de cette valeur nécessiterait une opération longue et délicate.

La présente invention a pour but de remédier à ces difficultés en réalisant un dispositif détecteur permettant d'obtenir aisément un angle de vue déterminé ou d'en modifier la valeur sans intervention directe à l'intérieur du dispositif de refroidissement.

Dans cet ordre d'idées on peut considérer la publication de brevet FR-A-2 300 332 qui décrit un détecteur de rayonnement infrarouge refroidi et doté d'une lentille optique pour recevoir le rayonnement extérieur et le diriger, à travers une fenêtre d'étanchéité et une ouverture d'un écran froid, sur le détecteur. En outre, un réflecteur annulaire entoure la lentille. Ce réflecteur de forme sphérique est centré sur le détecteur de manière à réfléchir vers celui-ci le rayonnement qu'il émet extérieurement à l'angle de vue présenté par le montage.

La publication de brevet US-A-3 875 408 décrit également un montage détecteur infrarouge refroidi où l'angle de vue est limité par une pièce sphérique comportant un trou, avec optique ou non, pour le passage du rayonnement et qui est centré sur le détecteur.

Il est connu d'autre part, par la publication de brevet JP-A-52 12 880, parue dans « Patent abstracts of Japan », vol. 1, n° 76, 21 juillet 1975 page 1131 E77, un détecteur infrarouge monté dans une enceinte, derrière une fenêtre plane transparente sur la face externe de laquelle il est procédé à un dépôt d'aluminium en dehors d'une partie centrale délimitée assurant le passage du rayonnement extérieur dans un angle de vue correspondant, afin de réduire le coefficient de radiation thermique.

L'avantage essentiel qui résulte d'une solution conforme à l'invention est la possibilité de fabriquer en grande série des dispositifs de refroidissement équipés de leurs détecteurs, le réglage de l'angle de vue du détecteur pouvant s'opérer par la suite sans avoir à modifier la structure interne de l'ensemble, l'angle de vue pouvant être fixé avec précision par intervention externe simple après encapsulation de l'ensemble et en fonction des besoins.

Deux modes de réalisation de dispositifs de détection IR suivant l'invention sont définis dans les revendications 1 et 6, respectivement, de la présente demande.

Les particularités et avantages de la présente invention apparaîtront dans la description qui suit et se rapportant aux deux modes de réalisation précités, et à l'aide des figures annexées qui représentent :

Figure 1, un schéma de rappel d'un dispositif conventionnel de détecteur IR refroidi ;

Figure 2, un schéma du premier mode de réalisation du dispositif de détection IR conforme à l'invention ;

Figure 3, un schéma relatif au fonctionnement d'un dispositif selon la Fig. 2 ;

Figure 4, un schéma partiel d'une variante de réalisation d'un dispositif selon la Fig. 2 et

Figure 5, un schéma du deuxième mode de réalisation d'un dispositif de détection IR conforme à l'invention.

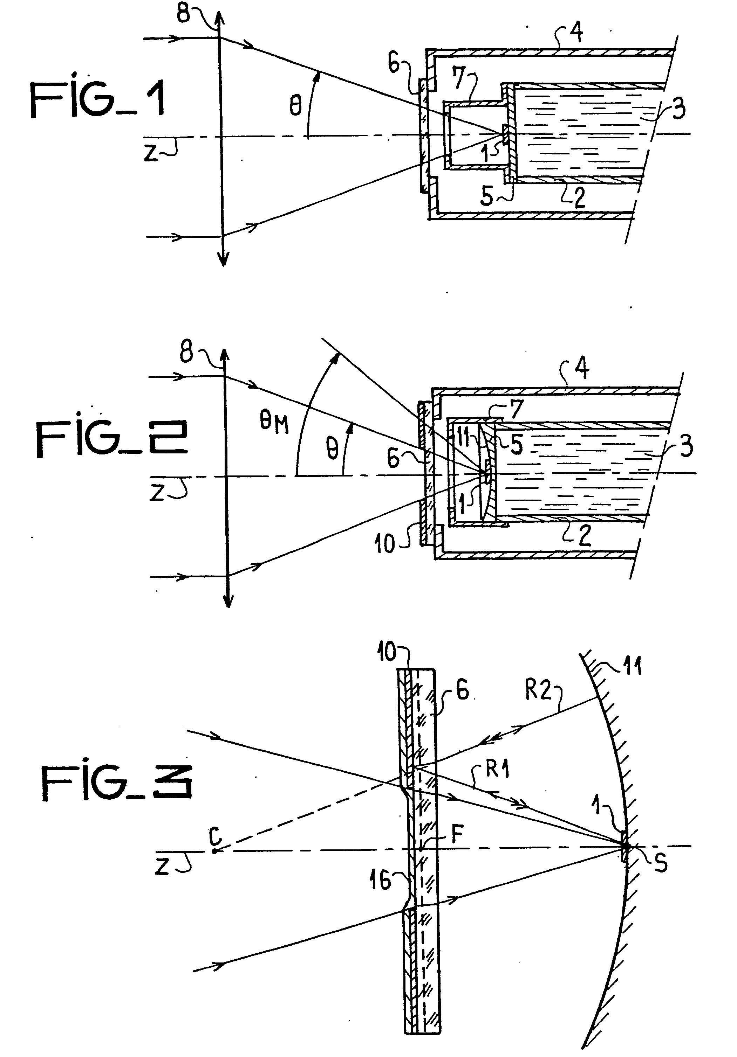

Sur la Fig. 1 on distingue un dispositif conventionnel comportant un détecteur 1 monté à l'intérieur d'un dispositif de refroidissement du type Dewar. Celui-ci comporte une structure interne 2 dans laquelle se trouve un liquide de refroidissement 3, de l'azote liquide généralement, et une structure externe 4. Un vide est opéré entre les deux structures. Le détecteur est solidaire d'une pièce métallique support dite table froide 5 formant une extrémité de la structure interne. La fenêtre transparente 6 termine une extrémité correspondante de la structure externe et permet la transmission lumineuse en préservant l'étanchéité. L'écran froid 7 est solidaire de la structure interne et délimite l'angle de vue θ autour de l'axe optique Z d'un objectif récepteur associé 8 destiné à focaliser le rayonnement IR sur le détecteur 1 centré dans le plan focal correspondant.

Cette structure comporte en outre, un miroir (non représenté sur la figure 1) sous forme d'un dépôt réfléchissant effectué sur une face d'un élément interposé sur le trajet optique de réception, ou sur celle externe de la fenêtre, ce dépôt étant, pour des raisons de commodité, extérieur au dispositif de refroidissement. Ce dépôt permet de délimiter avec précision l'angle de vue du détecteur en empêchant la transmission du rayonnement provenant de l'objectif 8 extérieurement à cet angle. En outre, il est utilisé en combinaison avec un autre élément optique pour assurer le renvoi vers le détecteur le rayonnement IR émis par celui-ci hors de l'ouverture utile définie par le dépôt.

La Fig. 2 représente le premier mode de réalisation selon l'invention suivant lequel le dépôt réfléchissant 10 est effectué sur la face extérieure de la fenêtre 6 constituée par une lame à faces parallèles. En outre, la table froide 5 supportant le détecteur 1 a sa face côté détecteur usinée pour former un miroir 11 de section circulaire destiné à coopérer avec le dépôt 10 comme représenté sur la Fig. 3. On considère par exemple le miroir 11 de forme sphérique, de centre C sur l'axe Z et le détecteur 1 disposé au sommet S. La fenêtre 6 est positionnée sensiblement en sorte que l'image de sa face externe vue du côté du détecteur passe par le foyer F du miroir 11, situé à égale distance de C et de S. Ceci résulte de l'effet de réfraction fonction de l'indice et de l'épaisseur de la lame 6. Cet effet est compensé par un décalage de la face externe portant le dépôt réflecteur par rapport au plan focal (en pointillé) passant par F ; dans ces conditions un rayon R1 issu du détecteur et hors du champ utile est réfracté par la lame et réfléchi par le miroir plan 10 pour former un rayon R2 qui passe par le centre C du miroir sphérique. Il s'en suit que ce rayon R2 parvient sous une incidence normale sur le miroir 11, est réfléchi selon luimême et revient finalement au détecteur selon le même trajet. Etant donné que le miroir 11 fait partie de la table 5 métallique portée à très basse température et que le détecteur est lui-même un corps froid, il résulte de l'agencement une limitation importante du bruit de fond. Pour limiter les dimensions du miroir 11 et éviter un fonctionnement trop rapproché de la fenêtre 6, on conserve de préférence la pièce écran froid 7 comme représenté sur la Fig. 2, mais en y aménageant un diaphragme délimitant l'angle de vue aux très grandes ouvertures et au moins à la valeur maximale $\theta_M$ d'angle de vue envisageable par le détecteur 1 dans des conditions limites de fonctionnement. Ainsi, l'ensemble dispositif de refroidissement et détecteur IR peut être commodément fabriqué en série et ajusté ensuite, cas par cas, pour l'angle $\theta$ désiré.

La Fig. 4 montre une variante du premier mode de réalisation du dispositif, suivant laquelle le dépôt réfléchissant 10 est effectué sur une face concave d'un élément optique 12 formant une lentille plan-concave, la seconde face côté détecteur étant plane. L'élément 12 peut constituer la fenêtre elle-même, ou un élément extérieur. De même que précédemment, l'élément 12 avec son miroir 10 doit être conjugué optiquement avec le miroir sphérique 11 et il se trouvera disposé entre le centre C et le foyer F.

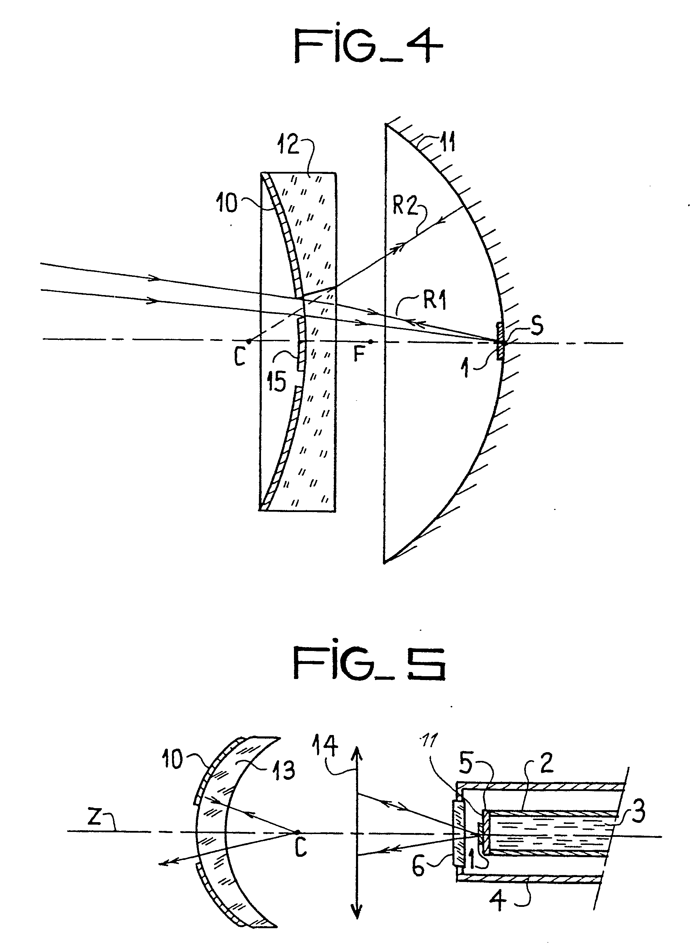

Le dépôt réfléchissant 10 peut également être effectué sur une face courbe d'un élément optique 13 extérieur comme représenté à titre d'exemple sur la Fig. 5 représentant le deuxième mode de réalisation du dispositif de détection suivant l'invention. L'élément 13 est un ménisque convergent associé à un ou plusieurs dioptres symbolisés par 14, l'ensemble pouvant faire partie de l'optique collectrice 8. Suivant cette forme de réalisation, il n'est pas nécessaire d'usiner particulièrement la table 5, formant le miroir réfléchissant 11, qui peut rester plane comme représenté et l'écran froid devient inutile. L'optique 13-14 sert à produire la conjugaison nécessaire entre le détecteur 1 et le miroir sphérique 10 pour créer l'image du détecteur en C, centre de courbure de la face métallisée. Dans cette configuration, le rayonnement IR émis par le détecteur hors de l'angle de vue utile de l'optique collectrice revient sur le détecteur en limitant ainsi la valeur du courant de fond continu à la valeur désirée.

Pour certaines applications, notamment pour réaliser des systèmes autodirecteurs, l'objectif collecteur 8 est d'un type à occultation centrale, tel un montage Cassegrain. Suivant une modification apportée du premier mode de réalisation du dispositif de détection conforme à l'invention, la zone d'occultation projetée au niveau de la face supportant le dépôt réfléchissant 10 est utilisée pour y effectuer un dépôt réfléchissant complémentaire 15 (représenté sur l'exemple de la Fig. 4) qui contribue encore à la limitation du fond continu.

Il résulte de la description faite que le dispositif de détection IR selon l'invention admet de nombreuses variations conformes aux caractéristiques exposées. Le miroir 11 peut être de forme cyclindrique ou sphérique associé à un dépôt réfléchissant plan (Fig. 2). Le dépôt 10 peut aussi être envisagé sur la face du hublot 6 mais ceci nécessite le démontage et le remontage de cet organe. En outre, il n'a pas été apporté de précision particulière en ce qui concerne l'obtention de filtres optiques qui peuvent être réalisés selon des techniques connues de diverses manières ; à titre d'exemple en se rapportant à la Fig. 3 un filtrage spectral optique est réalisable soit par le choix du matériau constituant la fenêtre 6, soit par le choix du ou des matériaux du dépôt réfléchissant 10 qui peut consister en une ou plusieurs couches réfléchissantes dans différentes bandes spectrales, soit par dépôt de matériaux filtrants en une ou plusieurs couches tel le dépôt 16 figuré et prolongé sur les parties métallisées 10 (ce dépôt peut aussi bien être fait sur l'autre face). Il n'est pas non plus apporté de précision quant à la géométrie de la zone centrale ménagée par le dépôt 10 et du diaphragme de l'écran froid 7, la forme pouvant être circulaire, rectangulaire, ou autre en fonction notamment de la géométrie de la surface photoréceptrice du détecteur IR.

**Revendications**

1. Dispositif de détection infrarouge comportant : un détecteur (1) avec au moins un élément photodétecteur, un dispositif de refroidissement (4) à l'intérieur duquel est monté le détecteur sur une pièce métallique support dite table froide (5) et derrière une fenêtre (6) transparente pour assurer à la fois l'étanchéité et le passage du rayonnement de réception, et une surface réfléchissante (10) extérieure au dispositif de refroidissement et portée par un élément (6, 12) interposé sur le trajet optique de réception du rayonnement infrarouge, pour limiter l'angle de vue du détecteur (1) en empêchant la transmission vers celui-ci du rayonnement de réception situé à l'extérieur de l'angle de vue et pour réfléchir vers le détecteur (1) le rayonnement émis par celui-ci extérieurement à l'angle de vue ; et étant caractérisé en ce que, ledit élément (6, 12) étant transparent, la surface réfléchissante est réalisée par un dépôt (10) délimité sur une face dudit élément transparent (6, 12) et en ce que la table froide (5) est usinée côté détecteur pour former un miroir réfléchissant (11) de section circulaire et qui est conjugué optiquement avec ce dépôt réfléchissant (10) en sorte que le rayonnement issu du détecteur (1) extérieurement à l'angle de vue est réfléchi par le dépôt (10) réfléchissant (11) vers le miroir où il parvient avec une incidence normale.

2. Dispositif selon la revendication 1, caractérisé en ce que le dispositif de refroidissement comporte une pièce métallique (7), dite écran froid, solidaire de la table froide (5) et pourvue d'un évidement formant diaphragme pour la transmission du rayonnement reçu à travers la fenêtre, les dimensions de l'évidement étant déterminées au moins égales à celles nécessitées pour l'angle de vue maximal envisageable pour le détecteur (1) associé.

3. Dispositif selon la revendication 1 ou 2, caractérisé en ce que le dépôt réfléchissant (10) est effectué sur la face externe de la fenêtre.

4. Dispositif selon la revendication 3, caractérisé en ce que le dépôt réfléchissant (10) est plan, la fenêtre étant constituée par une lame à faces parallèles (6) disposée sensiblement au foyer du miroir (11) considéré sur l'axe optique (Z) du dispositif passant par le centre du détecteur (1), le miroir étant sphérique ou cylindrique.

5. Dispositif selon la revendication 3, caractérisé en ce que le dépôt réfléchissant (10) est concave, la fenêtre étant constituée par une lentille plan-concave (12) disposée entre le centre et le foyer du miroir (11) ces points étant considérés sur l'axe optique du dispositif passant par le centre de courbure, le miroir étant sphérique ou cylindrique.

6. Dispositif de détection infrarouge comportant : un détecteur (1) avec au moins un élément photodétecteur, un dispositif de refroidissement (4) à l'intérieur duquel est monté le détecteur sur une pièce métallique support dite table froide (5) et derrière une fenêtre (6) transparente pour assurer à la fois l'étanchéité et le passage de rayonnement de réception, et une surface réfléchissante (10) extérieure au dispositif de refroidissement et portée par un élément (13) interposé sur un trajet optique de réception de rayonnement infrarouge, pour limiter l'angle de vue du détecteur (1) en empêchant la transmission vers celui-ci du rayonnement de réception situé à l'extérieur de l'angle de vue et pour réfléchir vers le détecteur (2) le rayonnement émis par celui-ci extérieurement à l'angle de vue ; et étant caractérisé en ce que, ledit élément (13) étant transparent, la surface réfléchissante est réalisée par un dépôt (10) sur une face convexe dudit élément transparent (13) d'une formule optique (13-14) extérieure au dispositif de refroidissement, la formule comportant au moins un autre élément transparent (14) pour conjuguer le centre de courbure de ladite face convexe avec le détecteur (1) en sorte que l'image du détecteur (1) obtenue après réflexion sur cette surface réfléchissante vient se former dans le plan du détecteur (1).

7. Dispositif selon l'une quelconque des revendications précédentes, utilisé avec un objectif de réception du rayonnement infrarouge provenant du champ observé et qui focalise ce rayonnement sur le détecteur (1), caractérisé en ce que l'objectif récepteur (8) est d'un type à occultation centrale et que le dépôt réfléchissant comporte un dépôt réfléchissant complémentaire (15) effectué à l'intérieur de l'angle de vue et délimité à la zone d'occultation au niveau de la face (12) supportant le dépôt réfléchissant (10).

**Claims**

1. An infrared detector device comprising a detector (1) having at least one photodetector element, a cooling device (4) in which the detector is mounted on a metal support, called cold table (5), and behind a transparent window (6) for ensuring the tightness as well as the passage of the received radiation, and a reflecting surface (10) outside of the cooling device, this surface being borne by an element (6, 12) which is located in the optical path of the received infrared radiation in order to limit the angle of aperture of the detector (1) by blocking the transmission of the received radiation beyond the aperture angle to the detector and by reflecting back onto the detector (1) any radiation emitted by the latter beyond the aperture angle, characterized in that, said elements (6, 12) being transparent, the refecting surface is constituted by a bordered layer (10) on one face of said transparent element (6, 12), and that the cold table (5) is shaped on the detector side such that a reflecting mirror (11) of circular cross-section is formed, this mirror being optically conjugated with the reflecting layer (10) such that the radiation issuing from the detector (1) beyond the aperture angle is reflected by the layer (10) back to the reflecting mirror (11), where it arrives with a normal incidence.

2. A device according to claim 1, characterized in that the cooling device comprises a metal piece (7) called cold screen, which is fixed to the cold table (5) and provided with a hole forming a diaphragm for the transmission of the radiation received through the window, the dimensions of the hole being at least equal to those which are necessary for the maximum allowable aperture angle for the associated detector (1).

3. A device according to claim 1 or 2, characterized in that the reflecting layer (10) is coated on the outer face of the window.

4. A device according to claim 3, characterized in that the reflecting layer (10) is an even layer, the window being constituted by a dice (6) having parallel faces and being disposed approximately in the focus of the mirror (11), considered on the optical axis (Z) of the device passing through the center of the detector (1), the mirror being spherical or cylindrical.

5. A device according to claim 3, characterized in that the reflecting layer (10) is a concave layer, the window being constituted by a plane-concave lense (12) disposed between the center and the focus of the mirror (11), these points being considered on the optical axis of the device passing through the center of curvature, the mirror being spherical or cylindrical.

6. In infrared detector device comprising a detector (1) having at least one photodetector element, a cooling device (4) in which the detector is mounted on a metal support called cold table (5) and behind a transparent window (6) for ensuring the tightness as well as the passage of the received radiation, and a reflecting surface (10) outside the cooling device, this surface being borne by an element (13) which is located in the optical path of the received infrared radiation in order to limit the angle of aperture of the detector (1) by blocking the transmission of the received radiation beyond the aperture angle to the detector and by reflecting back onto the detector any radiation emitted by the latter beyond the aperture angle, characterized in that, said element (13) being transparent, the reflecting surface is constituted by a layer (10) on a convex face of said transparent element (13) belonging to an optical formula (13-14) outside of the cooling device, this formula comprising at least one further transparent element (14) in order to conjugate the center of curvature of said convex face with the detector (1) such that the image of the detector (1) obtenaid after reflection on said reflecting surface is built in the detector (1) plane.

7. A device according to any one of the preceding claims used together with a lens system for receiving the infrared radiation coming from the observed field, this lens system focussing the radiation on the detector (1), characterized in that the lens system (8) is of the type having a central fade-out zone and that the reflecting layer comprises a complementary reflecting layer (15) made inside the aperture angle and bordered in accordance with the fade-out zone at the level of the face (12) on which the reflecting layer (10) is coated.

**Ansprüche**

1. Infrarot-Detektorvorrichtung, mit einem mindestens ein Photodetektorelement aufweisenden Detektor (1), einer Kühlvorrichtung (4), in deren Inneren und hinter einem transparenten Fenster (6) der Detektor auf einem metallischen Träger, d. h. einem gekühlten Tisch (5), montiert ist, derart, daß sowohl die Dichtheit als auch die Durchlässigkeit für die zu empfangende Strahlung gegeben ist, und mit einer Spiegelfläche (10), die sich außerhalb der Kühlvorrichtung auf einem Element (6, 12) im optischen Empfangsgang der Infrarotstrahlung befindet, um den Öffnungswinkel des Detektors (1) zu begrenzen und die Übertragung der Empfangsstrahlung außerhalb des Öffnungswinkels auf den Detektor zu verhindern, sowie um die vom Detektor (1) ausgehende Strahlung außerhalb dieses Öffnungswinkels auf diesen zu reflektieren, dadurch gekennzeichnet, daß die Spiegelfläche durch eine begrenzte Schicht (10) auf einer Seite des Elements (6, 12), das transparent ist, gebildet wird und daß der gekühlte Tisch (5) auf der Seite des Detektors in Form eines Spiegels (11) mit Kreisquerschnitt ausgebildet ist, der optisch so auf die reflektierende Schicht (10) ausgerichtet ist, daß die vom Detektor (1) außerhalb des Öffnungswinkels ausgehende Strahlung von der Schicht (10) reflektiert wird und auf den Spiegel (11) senkrecht auftrifft.

2. Vorrichtung nach Anspruch 1, dadurch gekennzeichnet, daß die Kühlvorrichtung ein metallisches Bauteil (7) aufweist, das kalter Schirm genannt wird, am gekühlten Tisch (5) befestigt ist und eine Blendenöffnung für den Durchlaß der durch das Fenster empfangenen Strahlung besitzt, wobei die Abmessungen der Blendenöffnungen mindestens gleich denen gewählt sind, die für den größtzulässigen Öffnungswinkel des zugeordneten Detektors (1) benötigt werden.

3. Vorrichtung nach Anspruch 1 oder 2, dadurch gekennzeichnet, daß die reflektierende Schicht (10) sich auf der äußeren Oberfläche des Fensters befindet.

4. Vorrichtung nach Anspruch 3, dadurch gekennzeichnet, daß die reflektierende Schicht (10) eben ist und das Fenster von einem Blättchen (6) mit parallelen Seiten gebildet wird, das etwa im Brennpunkt des Spiegels (11) auf der durch das Zentrum des Detektors (1) verlaufenden optischen Achse (Z) der Vorrichtung lieft, wobei der Spiegel sphärisch oder zylindrisch ist.

5. Vorrichtung nach Anspruch 3, dadurch gekennzeichnet, daß die reflektierende Schicht (10) konkav ist und das Fenster von einer eben-konkaven Linse (12) gebildet wird, die zwischen dem Zentrum und dem Brennpunkt des Spiegels (11) angeordnet ist, wobei diese Punkte auf der optischen Achse der Vorrichtung liegen, die durch den Krümmungsmittelpunkt verläuft und der Spiegel sphärisch oder zylindrisch ist.

6. Infrarot-Detektorvorrichtung, mit einem mindestens ein Photodetektorelement aufweisenden Detektor (1), einer Kühlvorrichtung (4), in deren Inneren und hinter einem transparenten Fenster (6) der Detektor auf einem metallischen Träger, d. h. einem gekühlten Tisch (5) montiert ist, derart, daß sowohl die Dichtheit als auch die Durchlässigkeit für die zu empfangende Strahlung gegeben ist, und mit einer Spiegelfläche (10), die sich außerhalb der Kühlvorrichtung auf einem Element (13) im optischen Empfangsgang der Infrarotstrahlung befindet, um den Öffnungswinkel des Detektors (1) zu begrenzen und die Übertragung der Empfangsstrahlung außerhalb des Öffnungswinkels auf den Detektor zu verhindern und um die vom Detektor (1) ausgehende Strahlung außerhalb dieses Öffnungswinkels auf diesen zu reflektieren, dadurch gekennzeichnet, daß die Spiegelfläche durch eine Schicht (10) auf einer konvexen Seite des Elements (13), das transparent ist, gebildet wird, wobei dieses Element zu einem Objektiv (13-14) gehört, das sich außerhalb der Kühlvorrichtung befindet und mindestens ein weiteres transparentes Element (14) aufweist, um den Krümmungsmittelpunkt der konvexen Seite auf den Detektor (1) so auszurichten, daß das Bild des Detektors (1), das nach Reflexion an dieser Spiegelfläche erhalten wird, in der Ebene des Detektors (1) entsteht.

7. Vorrichtung nach einem beliebigen der vorhergehenden Ansprüche in Verwendung mit einem Objektiv zum Empfang der vom Beobachtungsfeld kommenden Infrarotstrahlung und zur Fokalisierung dieser Strahlung auf den Detektor (1), dadurch gekennzeichnet, daß das Empfangsobjektiv (8) den Zentralbereich ausblendet und daß das Empfangsobjektiv (8) den Zentralbereich ausblendet und daß die spiegelnde Schicht eine komplementäre Spiegelbeschichtung (15) innerhalb des Öffnungswinkels besitzt, die die Ausblendzone in Höhe der Seite (12) begrenzt, welche die reflektierende Schicht (10) trägt.

0 044 791

FIG_1

FIG_2

FIG_3

# FIG_4

# FIG_5